# EUROPEAN PATENT SPECIFICATION

(11) **EP 2 777 774 B1**
(45) Date of publication and mention of the grant of the patent: **29.12.2021**
(21) Application number: 14158238.7
(22) Date of filing: 07.03.2014
(51) Int. Cl.: A62C 35/08, A62C 35/68, B60R 21/274, B01D 35/02

(54) **A valve mechanism comprising an improved means of filtering**
Ventilmechanismus mit verbessertem Mittel zum Filtern
Mécanisme de soupape comprenant un moyen de filtrage amélioré

(30) Priority: 14.03.2013 GB 201304597
(43) Date of publication of application: 17.09.2014
(73) Proprietor: Kidde Technologies, Inc., Wilson, NC 27896 (US)
(72) Inventor: Weller, Paul William, Cippenham, Berkshire SL1 5EG (GB)
(74) Representative: Dehns

(56) References cited:
- WO-A2-2004/091730
- US-A- 4 779 683
- US-A1- 2004 066 024
- None

## Description

### FIELD OF TECHNOLOGY

A valve mechanism comprising an improved means of filtering is described herein. The improved means of filtering may be used in conjunction with single-use or repairable valve mechanisms which have particular use in the field of suppressant release, such as a fire suppressant fluid. The new means of filtering could also be employed in other single use, fluid flow applications, such as those linked to fire extinguishing systems.

### BACKGROUND

Single use, or repairable, valve mechanisms for the rapid deployment of extinguishing agent from a cylinder may typically, although not exclusively, be used on moving platforms such as aircraft, trains, military or commercial vehicles. Such valves fall into two main groups; non-hermetic and hermetically sealed.

The former category is typified by the high rate discharge (HRD) valves used on suppressors in military and commercial vehicles. These can be electromechanical or protractor fired, consisting of a hinged beam, burst disc, frangible plug or poppet as the main opening mechanism.

Further applications, such as aerospace or other vehicles, require that the suppressor be hermetically sealed to minimise leakage over the required environmental range and to extend service life. Such hermetically sealed extinguishers can use an explosive cartridge located on the outside of an outlet diaphragm, which upon actuation ruptures the disc or frangible plug and releases agent into a distribution network or directly into the protected fire zone.

These methods, although very fast and reliable, can be prone to fragmentation of the diaphragm and pyrotechnic cartridge during actuation, and the fragments should be prevented from entering the distribution system (hoses, nozzles etc.) for (a) fear of injury or damage to components from flying debris and (b) causing a blockage leading to under performance of the system.

To prevent fragments from entering the system beyond the valve head, a filter in the form of a mesh is currently employed at the outlet of the valve to block fragments but allow extinguishing agent (e.g. dry chemical, gaseous or aqueous) through to the distribution system. US 2004/066024 A1 describes an inflator with a rupturable plate and a filter.

### SUMMARY

A valve mechanism is herein described in claim 1 and comprises a valve body having an inlet port and an outlet port and a passageway extending therebetween. A flow blocking element is provided in the passageway to block flow of a substance between the inlet and outlet ports. The valve mechanism also comprises means for breaking the flow blocking element, to thereby permit the substance to flow in a flow direction from the inlet port to the outlet port. The mechanism further comprises a filter, provided in the passageway between the flow blocking element and the outlet port, to filter the substance before it flows out of the outlet port. The filter separates the passageway into a filtered region and an unfiltered region. The filter has a first surface that is in flow communication with the unfiltered region, the first surface having an outer circumference. The filter is positioned within the passageway so that a first section of passageway wall extends circumferentially around the outer circumference of the filter and so that a space is provided between at least a part of the outer circumference of the first surface and the section of wall extending circumferentially around it.

According to the invention, the passageway further comprises a cavity that is formed in a section of the unfiltered region of the passageway. At least a portion of the cavity may be provided in a position within the passageway that lies downstream of the filter. The space may be in flow communication with the cavity, to thereby allow the substance to flow across the first surface of the filter and further downstream of the filter and into the cavity.

The filter comprises a sheet of mesh that is shaped so as to form a bowl shape having a first, open end, and an outer surface extending
therefrom. The filter may be manufactured from a sheet or wire mesh. The shape of the filter may be machined or cast from a solid. The filter may be made from many materials including steel, ferrous, or non-ferrous, or non-ferrous alloys, ceramics or polymers.

According to the invention, the filter comprises a bowl shaped mesh, the first surface of the mesh filter extending from a first, open end to an opposing second end, in a direction opposite to the flow direction. The filter is positioned in the passageway so as to provide the space between at least a part of the outer circumference of the first surface and the wall of the first section of passageway wall extending circumferentially around it, to thereby allow the substance to flow across the first surface of the filter from the second end to the first end.

According to the invention the passageway includes a first gradual increase in circumference upstream of an entrance to the cavity; and a second, abrupt increase in circumference of the entrance of the cavity.

In some of the examples described herein, the passageway may further comprise a cavity formed in a section of the unfiltered region of the passageway, at least a portion of the cavity being provided in a position that lies downstream of the filter, and wherein the space is in flow communication with the cavity. This thereby allows the substance to flow across the first surface of the bowl shaped filter from the second end to the first end, and past the first end, and further downstream and into the cavity.

In some of the examples described herein, the filter may be positioned within the passageway so that the space forms a flow channel or channels that extend across the first surface of the filter and between the outer circumference of the filter and the section of wall extending circumferentially around it.

In some of the examples described herein, the outer circumference of the filter may be smaller than the inner circumference of the section of wall surrounding it, the filter being positioned within the section of wall so that the space extends between the entire outer circumference of the filter and the section of wall extending circumferentially around it.

In some of the examples described herein, the space extends in the flow direction from the first section of passageway to an entrance into the cavity, the cavity extending, in the flow direction, from the entrance, to a first closed end of the cavity. The valve mechanism may further comprise a filter retaining ring which extends away from this first, closed end of the cavity in the direction opposite to the flow direction. The filter may be positioned on the retaining ring at a position that lies upstream of the closed end of the cavity.

In some of the examples described herein, the retaining ring may have a first side and an opposing second side, and an outer surface and an inner surface which extend circumferentially therebetween. The filter may be provided at the first side of the retaining ring and the retaining ring may be connected to the second, closed end of the cavity at its second side.

In one example, the retaining ring may be formed separately to the valve body and then interference fitted to the valve body. Other methods of fitting a retaining ring to the valve body may also be used. In another example, the retaining ring may comprise an annular flange that is integrally formed with the valve body.

In some of the examples described herein, the filter may comprise a bowl shaped hollow mesh that has a first, open end with an outer surface extending therefrom to form an opposing second end. The first side of the retaining ring may be connected to the mesh filter at its first end so that the bowl shaped outer surface of the mesh extends in a direction away from the ring.

The bowl shaped mesh filter may comprise a first section that has an outer cylindrical surface extending from this first open end, this cylindrical section having a uniform diameter. The mesh may also have a second section extending from this first section, and terminating at a second end, opposite to the first end, which may have the form of a flat, convex, conical or dome shaped surface.

The flow blocking elements described herein may be made from steel, ceramic, vitreous polymeric or any other material that can be formed into either a diaphragm or frangible plug.

### BRIEF DESCRIPTION OF THE FIGURES

Figure 1 shows a valve mechanism comprising a known filtering means at the outlet port.
Figure 2 is a chart showing the pressure history from an extinguisher discharge up and downstream of the valve mechanism of figure 1.
Figure 3 shows a valve mechanism comprising a new filtering means at the outlet port.
Figure 4 is a charge showing the pressure history from an extinguisher discharge up and downstream of the valve mechanism of figure 3.

### DETAILED DESCRIPTION

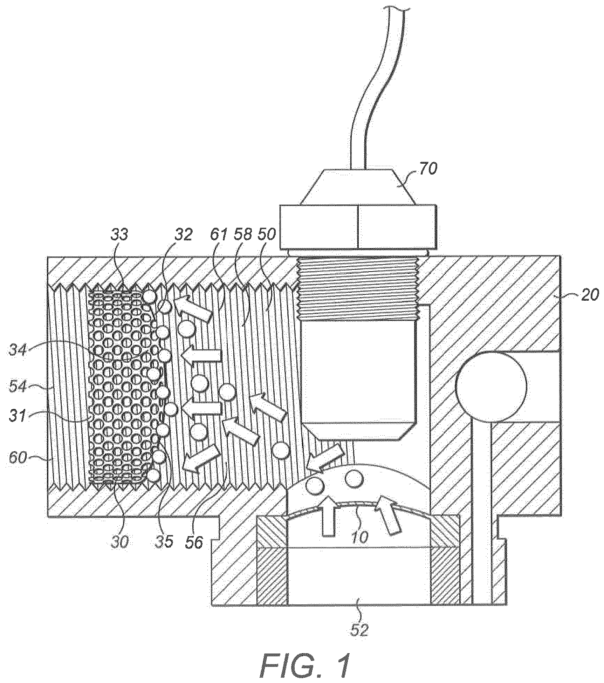

A known valve mechanism, 100, for a hermetically sealed extinguisher is shown in figure 1. This comprises a valve body, 20, having an inlet port, 52, an outlet port, 54, and a passageway, 56, extending therebetween. In this example, a flow blocking element, 10, is held within the valve body, 50, the flow blocking element thereby blocking and sealing the passageway, 56 when intact. In this example, the passageway in the valve mechanism is opened by actuation of an explosive means, 70, that is provided to facilitate fracture of the flow blocking element, 10, and thereby open the passageway, 56, between the inlet, 52, and outlet ports, 54. A hose or nozzle (not shown) may be connected to the outlet port, 54, for dispensing the fluid or substance to be released.'

The flow blocking element in this example comprises a metal diaphragm, 10, and an explosive cartridge, 70, is located above this diaphragm. Upon actuation of the explosive cartridge, this metal diaphragm, 10, ruptures, thereby opening up the passageway between the inlet and outlet ports and releasing the agent into a distribution network (such as a hose or nozzle connected to the outlet port), or directly into the protected fire zone.

This method, however, causes not only fragmentation of the diaphragm, 10, but also fragmentation of the pyrotechnic cartridge, 70, and the debris created should be prevented from entering the distribution system, for (a) fear of injury from flying debris and (b) causing a blockage leading to under performance of the system.

To prevent fragments from entering the system beyond the valve body, 20, a mesh filter, 30, is therefore further provided at the outlet port, 54, and between the flow blocking element and the outlet port to block fragments but still allow extinguishing agent (e.g. dry chemical, gaseous or aqueous) through to the distribution system.

In the known example shown in figure 1, the valve body can be described as having a dispensing region, 50, which is the area within the valve body between the flow blocking element and the outlet port, 54. At least a part of this dispensing region, 50, which is in communication with the outlet port, 54, has an inner surface, 58, that is threaded, as shown in figure 1.

A filter, 30, which, in this example, comprises a sheet of mesh that is shaped so as to form a bowl shape having a first, open end, 31, and an outer surface, 32, extending therefrom, is positioned in the dispensing region, 50, of the valve body. The mesh filter therefore separates the passageway into a filtered region, 60 (i.e. a region containing only substances that have already passed through the filter) and an unfiltered region, 61 (i.e. containing substances that have not yet, or will not, pass through the filter). The outer surface, 32, of the mesh filter is therefore in flow communication with the unfiltered region, 61. In particular, in this example, the outer surface, 32, of the mesh comprises a first section, 33, having an outer cylindrical surface extending from this first open end, this cylindrical section, 33, having a uniform diameter. The mesh also has a second section, 34, extending from this first section, and terminating at a second, end, 35, (opposite to the first end, 31), which has the form of a convex, or dome shaped surface.

As can be seen in figure 1, the mesh filter is positioned within the dispensing region of the valve body so that this first, open end, 31, is closer to the outlet port than its opposing, dome shaped or convex, second end, 35, which is closer to the inlet port, 52, of the valve body. The inner surface of the hollow mesh can therefore be described as being in flow communication with the outlet port.

As can also be seen in figure 1, the first section, 33, of the outer surface of the known filter means (i.e. the section that has a uniform diameter extending from the first end) has a corresponding/similar sized and shaped outer circumference to the inner circumference size and shape of the passageway, 56, in the dispensing region, 50, of the valve body in which it is positioned. This means that the first, cylindrical, section, 33, of the outer surface, 32, of the mesh filter is fitted tightly into this threaded section provided on the inner surface, 58, of the passageway, thereby resulting in the filter extending across and spanning the entire width of the section of the passageway in the dispensing region, 50, that leads to the outlet port, 54.

Therefore, any fragments or debris that are flowing in the direction of the outlet port must come into contact with the second section, 34, of the mesh filter that has a convex outer surface, 32, and which is provided at the second end, 35, of the mesh filter. If too large to fit through the holes in the mesh, the debris is thereby prevented from flowing any further towards the outlet port and so is prevented from being discharged through the outlet port, 54.

Although this type of filter has been shown to significantly reduce the transfer of debris downstream to an acceptable level within the hoses, at the nozzle outlets or within the protected zone, a problem with this known filter, however, is that the debris collects on the surface of the mesh filter and therefore can often restrict agent flow. When a metal diaphragm is ruptured by an explosive charge, some of this metal debris produced is still molten and can therefore bond to the mesh filter and so impede flow even further.

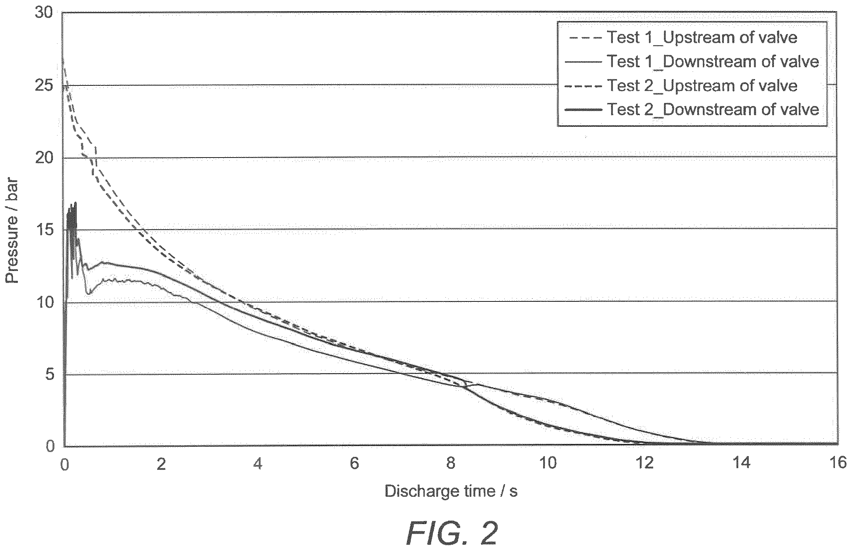

This effect is demonstrated in pressure decay curves shown in Fig 2. In the chart, pressure was measured just upstream and downstream of the valve body under the same test conditions. The chart shows that the two tests provide slightly different flow patterns when compared to each other. In addition the pressure downstream of the valve does not coincide with the pressure just upstream even though the limiting orifice is at the nozzles several metres away downstream.

The improved means of filtering described herein therefore aims to retain the rapid opening characteristics and agent mass flow for extinguishing systems such as those already known, whilst improving the free flow through the valve.

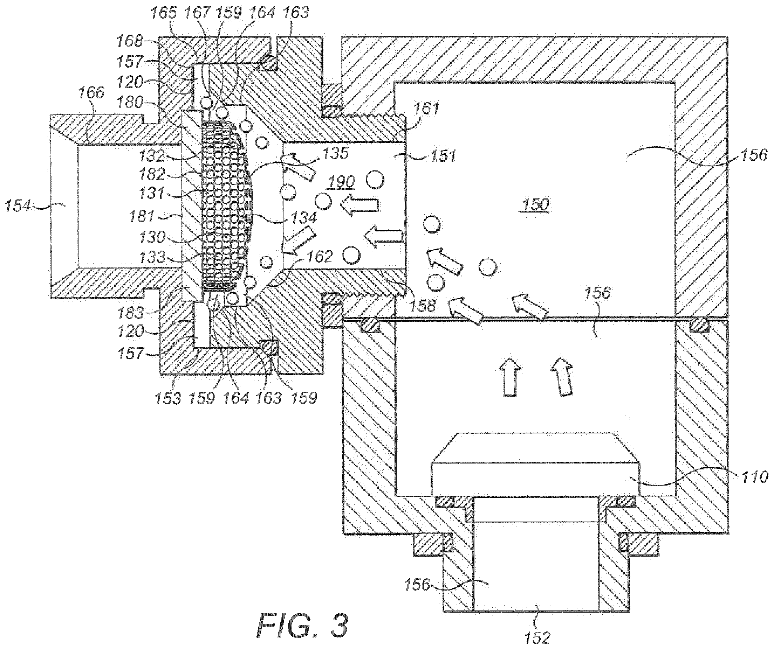

An example of an improved means of filtering for use in a valve mechanism is therefore shown in figure 3. A valve mechanism into which this new filter means may be fitted may comprise a valve body, 150, and an inlet port, 152, an outlet port, 154, and a passageway, 156, extending therebetween. This passageway is formed by and enclosed within the inner surface, 158, of the wall of the valve body which extends between the ports and which also extends circumferentially around the passageway.

The valve mechanism may also comprise a flow blocking element, 110, that is held within the valve body, 150, to block and seal the passageway, 156, between the inlet and outlet ports when intact, and thereby prevent flow of a substance between the inlet, 152, and outlet, 154, ports. The flow blocking element may be made from steel, ceramic, vitreous polymeric or any other material that can be formed into either a diaphragm or frangible plug.

The valve mechanism also comprises means (not shown) for breaking the flow blocking element, 110, to thereby open the passageway between the inlet and outlet ports and permit flow of a substance between the ports. In some examples, an explosive means may be used to break the flow blocking element, however other means could be used, such as means for providing an impact force, for example. The means used would depend on the type of flow blocking element used.

Although any shape or type of filter may be used with the filtering means described herein, in the example shown in figure 3, it can be seen that the means for filtering comprises a similar mesh filter, 130, to that described above, with respect to figure 1. This comprises a bowl shaped hollow mesh that has a first, open end, 131, and a bowl shaped outer surface, 132, extending therefrom.

In the example shown in figure 3, the bowl shaped hollow mesh can be seen as having a first, open, end, 131, with an outer cylindrical surface, 133, extending therefrom, the outer surface having a first section of generally uniform diameter extending from the open end, 131, and which terminates at its second, opposing end, 135, in the form of a dome shaped, convex or conical surface 134. This is not necessary, however, and the entire outer surface extending from the first end may be curved, dome shaped, conical or convex and may further have a varying diameter. A bowl shaped mesh filter having a flat second end, 135, or even a mesh in the form of a completely flat disc could also be used, however, this would not encourage debris to the sides of the assembly as effectively, as described below.

The valve body may also be described as having a dispensing region, 151, between the flow blocking element, 110, and the outlet port, 154. In an example where the mesh filter is bowl shaped, the filter is positioned within the dispensing region of the valve body so that the first, open end is closer to the outlet port than its second, flat, domed, curved, convex or conical shaped end. The second end of the filter therefore extends in the opposite direction to the flow direction, 190, of the substance to be discharged, i.e. it extends in the direction away from the outlet port, 154.

The filter, 130, is positioned and fitted in the dispensing region, 151, of the passageway, 156, in such a way that any substance that will eventually reach the outlet port must pass through the filter, 130, first. The filter therefore splits the passageway into two distinct regions: an unfiltered region, which contains any substance that has not yet passed, or will not pass, through the filter, and a filtered region, which contains any substance that has already passed through the filter.

In the example shown in figure 3, this is achieved by positioning the filter at a junction between two sections of passageway, one of which leads to the outlet port, with the filter spanning the entrance to this section; however, the filter could be positioned in any way within the passageway to the outlet port, 154, so long as it is positioned such that any substance that will eventually reach the outlet port must pass through the filter, 130, first. For example, the filter may be positioned so that it lies directly over the outlet port itself.

Upon actuation of the valve mechanism, i.e. upon fracture of the flow blocking element, a substance to be discharged therefore flows in a flow direction, 190, i.e. in the direction of the outlet port, from the inlet port, 152, and through the passageway towards the outlet port, 154. The substance to be discharged (as well as any fragments created by the breaking of the flow blocking element) then reaches the filter and, if small enough, passes through the filter, before being discharged out of the outlet port, 154.

A first difference between this new filtering means shown in figure 3 and that shown in figure 1, is that the mesh filter, 130, is positioned in the passageway so as to provide a space, or gap, 159, between the outer surface of the mesh, 130, and the inner surface, 158, of the section of passageway which extends circumferentially around it. In this example, this is achieved due to there being a greater difference between the size of the outer circumference of the filter surface of the mesh filter and the circumference of the wall of the passageway that is extending circumferentially around it, as compared to the filter in figure 1. This therefore creates a free area for flow between the inner surface of the passageway and the outer circumferential surface of the filter.

In an example wherein the filter is bowl shaped, this means that any substance that is flowing in the direction of the outlet port can, via this space, or gap, 159, flow unimpeded across the outer surface of the filter from its second end, 135, all the way to its first end, 131. This bowl shape of the filter therefore also encourages fragments that are too large to pass through the filter to flow towards the sides of the filter and away from its second end.

In some examples, this space may not cover the entire outer surface of the filter and a portion of the outer surface of the filter may also be blocked without affecting the flow of suppressant. For example, the outer circumference of the filter surface may be similar to that of the wall extending circumferentially around it, but the wall may have channels provided therein, to thereby provide a space, 159, that may extend at least partially across the outer circumferential surface of the mesh filter. For example, the channel or channels may extending from its second end to its first end, while the rest of the outer circumferential surface remains blocked.

The space provided next to the filter outer surface can therefore be designed specifically for different valve mechanisms which are used to discharge different substances. This ensures that the combination of encouraging fragments to the side of the filter (and further into a cavity, as described later) and any partial blockage of the filter surface would not restrict agent flow.

Due to this space, 159, being provided between the outer surface of the mesh filter and the inner surface of the passageway, in the example shown in figure 3, any debris that comes into contact with the second end of the mesh filter is encouraged to flow away from the second end, 135, and also down the sides, 133, of the mesh and away to the first end of the filter. This prevents the second end of the mesh becoming clogged with debris and further provides a greater area of mesh over which the substance flowing can be filtered than in the known filtering means.

In contrast to this, in the known filter shown in figure 1, a space is not provided between the outer circumferential surface of the filter and the section of wall that extends around it. Therefore, the substance flowing in the direction of the outlet port is not able to flow across the sides of the mesh all the way to its first end, 31, but is instead blocked from doing so due to its contact with the inner walls, 58, of the passageway, 56. This therefore'results in clogging of the filter surface at its second end.

A second difference between this new filtering means and that shown in figure 1 is that the valve mechanism may further comprise a cavity, 157, that is provided in the passageway of the valve body.

The cavity, 157, lies in the unfiltered region of the valve mechanism, so as to collect debris that is too large to pass through the filter, but is positioned so that its closed end, 120, lies further downstream from the filter so as to retain the debris away from the filter.

The cavity, 157, may be formed in a section, 165, of the unfiltered region of the passageway, 156, so that at least a portion of the cavity, is provided in a position within the passageway that lies downstream of the filter, 130, as shown in figure 3. The space, 159, is connected to and in flow communication with the cavity, and thereby allows any debris that is too large to pass through the filter to flow across the outer surface, 132, of the filter 130, and further downstream of the filter and into the cavity, 157.

In the example shown in figure 3, wherein a bowl shaped mesh filter is used, the space, 159, is in flow communication with the cavity, 157, and thereby allows the debris and fragments that are too large to pass through the filter to flow across the outer surface, 132, of the filter, 130, all the way from the second, dome shaped end, 135, to the first end 131, and then on past the first end, 131, and further downstream and into the cavity, 157.

As can be seen in figure 3, the space, 159, extends in the flow direction, 190, from the section of passageway that extends circumferentially around the outer circumference of the filter, 164, to an entrance to the cavity. The cavity then extends therefrom, in the flow direction, to a first, closed end, 120, of the cavity, 157. In the example shown in figure 3, the valve mechanism further comprises a filter retaining ring, 180, which extends away from this first, closed end, 120, of the cavity, 157, in the direction opposite to the flow direction, as shown in figure 3. The filter is therefore positioned on this retaining ring, 180, at a position that lies upstream of the closed end, 120, of the cavity. Due to this, the cavity is therefore positioned downstream of at least a part, or all of the filter. This means that debris can be retained in a position away from the filter so that it does not impede flow through the filter to the outlet port, 154.

In some examples, such as that shown in figure 3, the ring, 180, may be interference fit into the valve. In other examples, the retaining ring can be integrally formed with the valve. Other methods of fitting the retaining ring to the valve body may also be used.

In the example shown in figure 3, the retaining ring, 180, has a first side, 182, and an opposing second side, 181, and an outer surface, 183, extending circumferentially therebetween. The ring further comprises an inner surface which extends circumferentially therebetween, however this is not shown in figure 3. This inner surface therefore receives the filtered substance that has already passed through the filter and is to be discharged out of the outlet port, 154.

The filter may be provided at the first side, 182, of the retaining ring and the retaining ring is connected to the closed end, 120, of the cavity, 157, at its second side, 181.

In an example such as that shown in figure 3, wherein the filter comprises a bowl shaped hollow mesh as described above, the first side, 182, of the retaining ring may be connected to the mesh filter, 130, at its first end, 131, so that the bowl shaped outer surface of the mesh extends in a direction away from the ring, 180. This protruding outer surface therefore further encourages the debris that is too large to pass through the filter to flow away from the second, domed end, 135, of the filter, and down the sides, 133, of the filter, 130, and further downstream so that it can be retained out of the way in the cavity, 157.

It can be seen in figure 3, therefore that the cavity, 157, is provided around the circumference of the retaining ring and extends radially outwards therefrom. Although in the example shown in figure 3, the cavity extends around the entire circumference of the retaining ring, in some examples, the cavity may extend only around part of the outer circumference of the retaining ring.

As shown in figure 3, the walls of the passageway may also be shaped and sized in such a way as to compliment the shape of the outer surface, 132, of the mesh filter and/or to improve flow to the filter, to thereby allow the substance to flow to and around the outer surface of the mesh filter from its second end all the way to the opposing open, first end, 131, and then on into the cavity, 157.

The walls of the cavity, 157, may also be sized and shaped in such a way as to provide the cavity, 157. The shape of the passageway, and the corresponding features contained therein, as shown in figure 3 will now be described in more detail. This is, however, just one example of a passageway within a valve mechanism that could comprise this new filtering means and other valve mechanisms could be used that have differently designed passageways but which still have a space, 159, and possibly also a cavity, 157, formed downstream of the filter.

As shown in the example of figure 3, at least a part of the first section of the passageway, 165, that corresponds to the cavity, 157, lies downstream of the first end, 131, of the filter, 130. In other examples, however, the cavity may lie fully downstream of the filter's first end. The cavity extends in the flow direction, 190,

(i.e. the direction of the outlet port, 154, from a first, open end, 167, to a second, closed end, 168. The second closed end, 168, of this section is joined, in this example, to a second section of passageway, 166, which lies on the opposite side of the filter to the first section and so lies in the filtered region of the passageway and extends therefrom in the direction of the outlet port. In this example, this first section, 165, has a greater diameter than a diameter of the second section, 166, and also a greater diameter than that of the filter, 130.

In this example, the closed end is connected to the second section of passageway, 166, by a connecting wall, 120, which is provided at this junction between the first section, 165, and the second section, 166 to compensate for the difference in diameters. The connecting wall, 120, extends from the inner circumferential surface at the second end, 168, of the first section, 166, to the inner circumferential surface of the second section, 165, of the passageway extending therefrom.

In the example shown in figure 3, this thereby provides an entrance (not shown) into the second section of passageway, that is positioned generally in the centre of the connecting wall. The entrance into the second section of passageway does not have to be positioned completely centrally, however, and this is just one example of one potential design that could be used. The entrance into the second section of passageway is surrounded, in this example, circumferentially by the connecting wall, 120.

Due to the difference in diameters and circumferences between the first, 165, and second, 166, sections, wherein the diameter of the first section is relatively large compared to that of the second section, this connecting wall, 120, creates a second kind of 'dead end' in the passageway. Therefore, any debris that is too large to pass through the filter will come into contact with the second end of the filter, and flow, via the space, 159, to the first end of the filter and then further downstream to and into the cavity, before it hits the connecting wall, i.e. the closed end, 120, of the cavity, 157.

Although in the example shown in figure 3, the inner surface of the first section, 165, comprises two sections which extend generally perpendicular to each other, i.e. the circumferential surface, 153, between 167 and 168, as well as the surface of the connecting wall, 120, in an example where there is not such an abrupt change in diameter, the inner surface of the first section, and therefore cavity, could comprise just one continuous, perhaps curved, surface.

As can be seen in figure 3, a filter retaining ring is provided, 180, which extends from the closed end, 120, of the cavity, in the direction opposite to the flow direction.

As described above, the retaining ring, 180, is provided at the junction between the first section, 165, and the second section, 166, of passageway. The retaining ring extends from this junction in the opposite direction to the flow direction, through the first section of passageway, 165, that comprises the cavity, 157, and to the first end of the first section, 165, of passageway, i.e. the entrance to the cavity, 157. The retaining ring, 180, has an inner circumferential surface and an outer circumferential surface, 183, and is provided at the junction, and at the entrance to the second section, so as to create a barrier between the first and second sections, around its outer circumference, 183. As can be seen in figure 3, this therefore means that the outer circumference, 183, of the ring, 180, forms a wall of the cavity. The cavity, 157, can therefore be described as extending around the outer circumference of the retaining ring, and therefore also extending around the circumference of the filter attached thereto (albeit downstream of the filter). It may extend around the entire circumference of the retaining ring and filter, or at least partially around it.

Since the outer circumference of the retaining ring forms a barrier between the first, 165, and second, 166 sections of passageway, the only way that a substance can flow to the outlet port, 154, is if it goes through the filter and then through the ring, 180.

In this example, this retaining ring, 180, has been manufactured separately to the valve body, however, other means may be used, such as an annular flange that is integrally formed with the valve body. In this example the retaining ring, 180, is mounted on the closed end, 120, of the cavity and over this entrance to the second section of passageway which extends towards the outlet port.

As shown in figure 3, the retaining ring may have a first side, 182, and an opposing second side, 181, and an outer surface, 184, and an inner surface extending circumferentially therebetween. The first side, 182, of the retaining ring may be adapted to be connected to the filter at its first, open end, 131, so that the second end, 135, of the mesh extends in a direction away from the ring, 180.

The second side, 181, of the retaining ring may be adapted to be fitted, either directly, or indirectly to an inside surface, 120, of the valve body, that either has the outlet port, 154, provided therein, or which provides a further channel, or passageway , 166, that leads to the outlet port, 154, as shown in figure 3. In this example, the retaining ring is interference fitted (or press-fitted) onto the connecting wall, 120, of the valve body, which connects the first, 165, and second sections, 166 of passageway, i.e. the second, closed, end of the cavity, 157.

Due to the relative positioning of the mesh filter, 130, the retaining ring, 180, and the closed end of the cavity, 157, when the second side, 181, of the retaining ring, 180, is fitted to the connecting wall, 120, the inner surface of the hollow mesh filter therefore lies in the filtered region of the passageway and is in flow communication with the outlet port, whereas the outer, protruding surface, 132, lies in the unfiltered region of the passageway and is in flow communication with the inlet port.

In the example shown in figure 3, the retaining ring is positioned centrally to the circumferential cavity, however, this is not necessary. As can be seen in figure 3, in this example the retaining ring is partly embedded in the closed wall, 120, of the cavity.

In this example, a third section, 164, of the passageway is also provided which leads to the entrance of the cavity and connects with the cavity wall, 165. This third section has a smaller circumference than the outer circumference of the cavity, 157, i.e. than the circumference of the first section, 165. In the example shown, the circumference of this section is also increasing in the direction of the cavity, 157, to compliment the filter shape and thereby improve flow around the filter, however, this is not necessary, and the shape chosen would depend on the type and shape of filter used.

Further, it can be seen that the inner circumference of the passageway abruptly increases at the junction between the third section, 164, and this first section, 165, i.e. at the entrance to the cavity and this abrupt increase in circumference at the cavity entrance further helps to trap and retain the debris away from the filter. Further details of the shape of certain sections of the passageway in the dispensing region that lead to the outlet port will now be described.

In particular, it can be seen that the inner circumferential wall, 158, of the passageway, 156, in the dispensing region of the valve body comprises a bell-shaped region, designed to compliment and correspond to the shape of the outer surface of the mesh filter and to thereby provide an improved flow path across the outer surface of the mesh filter.

This bell shaped section is made up from a fourth and fifth section of the passageway, The fourth section is a cylindrical section, 161, of uniform diameter which extends in the flow direction, 190, i.e. the direction of the outlet port, 154. This section has a smaller inner diameter than the filter means, 130 and acts to direct the flow of substance to be released in the direction of the outlet port, 154.

The fifth section, 162, extends, in the flow direction, 190, away from this fourth section, 161, and has an increasing diameter as it extends away from the fourth section and in the direction of the filter, 130, and therefore outlet port, 154. The inner diameter of this section of passageway increases to a diameter that is greater than the diameter of the outer surface of the mesh filter, 130. In an example where a retaining ring, 180, is provided with the mesh filter, this may increase to a diameter that corresponds to or is similar to the outer circumferential diameter of the retaining ring, 180, (or other protrusion means).

A sixth section, 163, of the passageway then extends away from this fifth section, 162, and has a generally uniform diameter. As shown in figure 3, the convex section, 134, at the second end, 135, of the filter is contained within this section of the passageway. Since this section of the passageway has a diameter that is greater than the outer circumference of the mesh filter, a space, 159, is provided between the outer surface of the mesh filter and the inner surface, 156, of the passageway in which it is positioned. This section of passageway connects to the third section, 164, described above.

Therefore, in summary, due to the fact that a space is provided between the outer circumferential surface of the filter and the wall that extends circumferentially around it, fragments or debris contained in the substance to be discharged can flow all the way from the second end of the filter to the opposing first end, so that the filter does not become blocked by debris that may otherwise be trapped on its surface.

Further, since the second end of the mesh filter may further extend in the direction of the inlet port and have a dome shaped, conical or convex surface, any debris that is present in the substance travelling towards the outlet port is encouraged, due to this filter shape, to flow across the outer surface of the mesh filter, from the second end, 135, to the first end, 131.

Further, since the valve mechanism may further comprise a cavity that is provided on the unfiltered side of the passageway, but further downstream from the filter, any debris that is too big to pass through the filter contacts the outer surface of the filter, moves across the outer surface of the filter from the second end to the first end, and then further downstream to be trapped in the cavity.

Since this cavity is downstream of the filter, the debris is trapped in a position that does not impede flow through the filter and out of the outlet port. This structure therefore allow full agent flow as it encourages the collection of fragments in an area of the valve body that minimizes restriction of the main flow route. This has significant advantages, in that it acts to collect debris and fragments created during rupture of the frangible element in a position that does not impede fluid flow through the filter and ultimately to the outlet port.

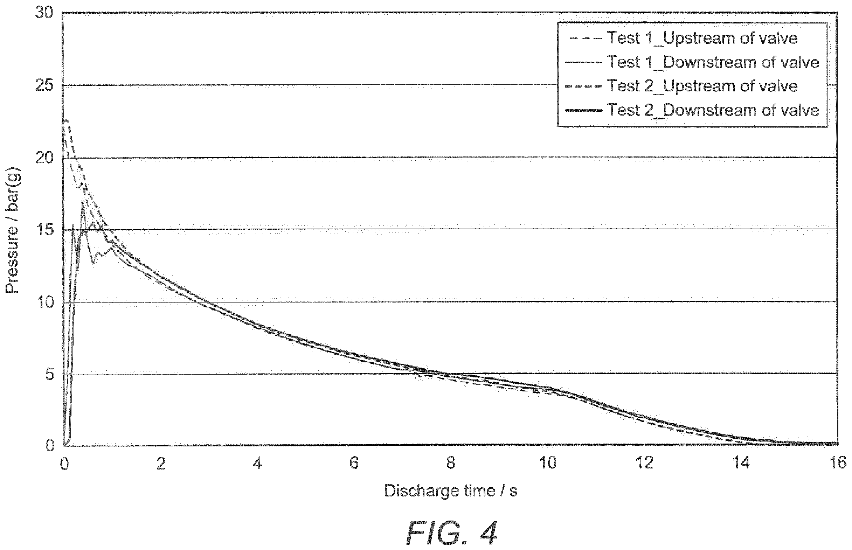

This improvement to flow characteristics is demonstrated in pressure decay curves shown in Fig 4. The chart clearly shows that both discharge tests provide very similar discharge pressure decay profiles indicating that there is either exactly the same amount or no fragmentation within the flow. In both cases the downstream pressure is shown to rapidly reach the same pressure as seen upstream of the valve. These pressure curves remain coincident throughout the remainder of the discharge. This zero pressure drop across the valve outlet highlights that the flow path is clear and that the nozzle located downstream of the valve is the only limiting orifice within this pressure system.

## Claims

1. A valve mechanism comprising
a valve body (150) having an inlet port (152) and an outlet port (154) and a passageway extending therebetween,
and a flow blocking element (110) provided in the passageway to block flow of a substance between said inlet and outlet ports,
and means for breaking said flow blocking element to thereby permit said substance to flow in a flow direction from said inlet port to said outlet port
and further comprising a filter (130) provided in said passageway (156) between said flow blocking element and said outlet port, to filter said substance before it flows out of said outlet port (154), said filter (130) separating said passageway into a filtered region and an unfiltered region,
wherein said filter (130) has a first surface that is in flow communication with said unfiltered region, said first surface having an outer circumference,
and wherein said filter (130) is positioned within said passageway so that a first section of passageway wall extends circumferentially around the outer circumference of said filter, and so that a space (159) is provided between at least a part of said outer circumference of the first surface and the section of wall extending circumferentially around it, said filter (130) comprising a bowl shaped mesh, said first surface extending from a first, open end (131) to an opposing second end (135), in a direction opposite to said flow direction,
and wherein said filter (130) is positioned in said passageway so as to provide said space (159) between at least a part of said outer circumference of said first surface, to thereby allow said substance to flow across said first surface of said filter from said second end to said first end,
and wherein said passageway (156) further comprises a cavity (157) formed in a section of said unfiltered region of the passageway, and **characterised by** said passageway (156) including:
a first gradual increase in circumference upstream of an entrance to the cavity; and a second, abrupt increase in circumference of the entrance of the cavity.

2. The valve mechanism of any of claim 1
at least a portion of said cavity (157) being provided in a position within the passageway that lies downstream of said filter and wherein said space is in flow communication with said cavity (157), and thereby allows said substance to flow across said first surface of said filter and further downstream of said filter and into the cavity (157).

3. The valve mechanism of claim 1 at least a portion of said cavity (157) being provided in a position that lies downstream of said filter (130), and wherein said space (159) is in flow communication with said cavity (157), and thereby allows said substance to flow across said first surface of said filter (130) from said second end to said first end, and past said first end further downstream and into said cavity (157).

4. The valve mechanism of any preceding claim wherein said filter (130) is positioned within said section of passageway so that said space (159) forms a flow channel or channels that extend across the first surface of the filter and between said outer circumference of the filter and the section of wall extending circumferentially around it.

5. The valve mechanism of claim 1 wherein the outer circumference of the filter (130) is smaller than the inner circumference of the section of wall surrounding it, said filter (130) being positioned within said section of wall so that said space extends between the entire outer circumference of the filter and the section of wall extending circumferentially around it.

6. The valve mechanism of any of any of claims 2 or 3 wherein
said space (159) extends in the flow direction from said first section of passageway to an entrance to said cavity (157), said cavity extending, in the flow direction, from said entrance, to a first closed end of said cavity,
said valve mechanism further comprising a filter retaining ring (180) which extends away from this first, closed end of the cavity in the direction opposite to the flow direction,
said filter (130) being positioned on said retaining ring (180) at a position that lies upstream of said closed end of the cavity (157).

7. The valve of claim 6 wherein the retaining ring (180) has a first side and an opposing second side and an outer surface and an inner surface which extend circumferentially therebetween,
wherein the filter is provided at the first side of the retaining ring (180) and wherein the retaining ring is connected to the second, closed end of the cavity at its second side.

8. The valve mechanism of claim 7
wherein said filter comprises a bowl shaped hollow mesh that has a first, open end (131), with an outer surface extending therefrom to form an opposing second end (135),
and wherein the first side (182) of the retaining ring is connected to the mesh filter at its first end so that the bowl shaped outer surface of the mesh extends in a direction away from the ring (180).

9. The valve mechanism of any of claims 6 to 8 wherein said cavity (157) extends radially outwards from at least a part of said outer circumferential surface of said retaining ring.

10. The valve mechanism of claim 9 wherein said cavity (157) extends radially outwards from said entire outer circumference of said retaining ring (180).

11. The valve mechanism of any preceding claim wherein the flow blocking element is made from steel, ceramic, vitreous polymeric or any other material that can be formed into either a diaphragm or plug.

12. The valve mechanism of any preceding claim wherein the filter (130) comprises a bowl shaped hollow mesh that has a first section comprising an outer cylindrical surface of uniform diameter, extending from its first open end, and which terminates at a second, opposing end, in the form of a flat, domed, convex or conical surface.

## Patentansprüche

1. Ventilmechanismus, umfassend:
einen Ventilkörper (150) mit einem Einlassanschluss (152) und einem Auslassanschluss (154) und einem Durchgang, der sich zwischen diesen erstreckt,
und ein Strömungsblockadeelement (110), das in dem Durchgang bereitgestellt ist, um die Strömung einer Substanz zwischen dem Einlass- und Auslassanschluss zu blockieren,
und Mittel zum Aufbrechen des Strömungsblockadeelements, um dadurch das Strömen der Substanz in eine Strömungsrichtung von dem Einlassanschluss zum Auslassanschluss zu ermöglichen,
und ferner umfassend einen Filter (130), der in dem Durchgang (156) zwischen dem Strömungsblockadeelement und dem Auslassanschluss bereitgestellt ist, um die Substanz zu filtern, bevor sie aus dem Auslassanschluss (154) hinausströmt, wobei der Filter (130) den Durchgang in eine gefilterte Region und eine ungefilterte Region trennt,
wobei der Filter (130) eine erste Oberfläche aufweist, die in Strömungskommunikation mit der ungefilterten Region steht, wobei die erste Oberfläche einen Außenumfang aufweist,
und wobei der Filter (130) innerhalb des Durchgangs positioniert ist, sodass sich ein erster Abschnitt der Durchgangswand umfänglich um den Außenumfang des Filters herum erstreckt und sodass ein Raum (159) zwischen mindestens einem Teil des Außenumfangs der ersten Oberfläche und dem Wandabschnitt, der sich umfänglich um sie herum erstreckt, bereitgestellt ist, wobei der Filter (130) ein schalenförmiges Netz umfasst, wobei sich die erste Oberfläche von einem ersten offenen Ende (131) zu einem gegenüberliegenden zweiten Ende (135) in einer Richtung entgegengesetzt der Strömungsrichtung erstreckt,
und wobei der Filter (130) in dem Durchgang positioniert ist, um den Raum (159) zwischen mindestens einem Teil des Außenumfangs der ersten Oberfläche bereitzustellen, um dadurch das Strömen der Substanz von dem zweiten Ende zu dem ersten Ende über die gesamte erste Oberfläche des Filters zu ermöglichen,
und wobei der Durchgang (156) ferner einen Hohlraum (157) umfasst, der in einem Abschnitt der ungefilterten Region des Durchgangs ausgebildet ist, und **gekennzeichnet durch** den Durchgang (156), der Folgendes beinhaltet:
eine erste allmähliche Zunahme des Umfangs stromaufwärts von einem Eingang in einen Hohlraum; und eine zweite abrupte Zunahme des Umfangs des Eingangs des Hohlraums.

2. Ventilmechanismus nach Anspruch 1,
wobei mindestens ein Bereich des Hohlraums (157) in einer Position innerhalb des Durchgangs bereitgestellt ist, der stromabwärts von dem Filter liegt, und wobei der Raum in Strömungskommunikation mit dem Hohlraum (157) steht und dadurch das Strömen der Substanz durch die gesamte erste Substanz des Filters und ferner stromabwärts von dem Filter und in den Hohlraum (157) ermöglicht.

3. Ventilmechanismus nach Anspruch 1,
wobei mindestens ein Bereich des Hohlraums (157) in einer Position bereitgestellt ist, die stromabwärts von dem Filter (130) liegt, und wobei der Raum (159) in Strömungskommunikation mit dem Hohlraum (157) steht und dadurch das Strömen der Substanz von dem zweiten Ende zu dem ersten Ende durch die gesamte erste Substanz des Filters (130) und über das erste Ende ferner stromabwärts hinaus und in den Hohlraum (157) ermöglicht.

4. Ventilmechanismus nach einem der vorhergehenden Ansprüche, wobei der Filter (130) innerhalb des Abschnitts des Durchgangs positioniert ist, sodass der Raum (159) einen Strömungskanal oder -kanäle ausbildet, die sich über die gesamte erste Oberfläche des Filters und zwischen dem Außenumfang des Filters und dem Wandabschnitt, der sich umfänglich um sie herum erstreckt, erstreckt.

5. Ventilmechanismus nach Anspruch 1, wobei
der Außenumfang des Filters (130) kleiner als der Innenumfang des Wandabschnitts ist, der ihn umgibt, wobei der Filter (130) innerhalb des Wandabschnitts positioniert ist, sodass sich der Raum zwischen dem gesamten Außenumfang des Filters und dem Wandabschnitt, der sich umfänglich um ihn herum erstreckt, erstreckt.

6. Ventilmechanismus nach einem der Ansprüche 2 oder 3, wobei
sich der Raum (159) in die Strömungsrichtung von dem ersten Abschnitt des Durchgangs zu einem Eingang des Hohlraums (157) erstreckt, wobei sich der Hohlraum in der Strömungsrichtung von dem Eingang zu einem ersten geschlossenen Ende des Hohlraums erstreckt,
der Ventilmechanismus ferner einen Filterhaltering (180) umfasst, welcher sich von diesem ersten geschlossenen Ende des Hohlraums weg in die Richtung entgegengesetzt der Strömungsrichtung erstreckt,
der Filter (130) an einer Position, die stromaufwärts von dem geschlossenen Ende des Hohlraums (157) liegt, an dem Haltering (180) positioniert ist.

7. Ventil nach Anspruch 6, wobei der Haltering (180) eine erste Seite und eine gegenüberliegende zweite Seite und eine Außenoberfläche und eine Innenoberfläche aufweist, die sich umfänglich zwischen diesen erstrecken,
wobei der Filter an der ersten Seite des Halterings (180) bereitgestellt ist und wobei der Haltering mit dem zweiten geschlossenen Ende des Hohlraums an seiner zweiten Seite verbunden ist.

8. Ventilmechanismus nach Anspruch 7,
wobei der Filter ein schalenförmiges hohles Netz umfasst, das ein erstes offenes Ende (131) mit einer Außenoberfläche, die sich davon erstreckt, um ein gegenüberliegendes zweites Ende (135) auszubilden, aufweist,
und wobei die erste Seite (182) des Halterings mit dem Netzfilter an seinem ersten Ende verbunden ist, sodass sich die schalenförmige Außenoberfläche des Netzes in eine Richtung von dem Ring (180) weg erstreckt.

9. Ventilmechanismus nach einem der Ansprüche 6 bis 8, wobei sich der Hohlraum (157) radial auswärts von mindestens einem Teil der Außenumfangsoberfläche des Halterings erstreckt.

10. Ventilmechanismus nach Anspruch 9, wobei sich der Hohlraum (157) radial auswärts von dem gesamten Außenumfang des Halterings (180) erstreckt.

11. Ventilmechanismus nach einem der vorhergehenden Ansprüche, wobei das Strömungsblockadeelement aus Stahl, Keramik, glasartigem Polymer oder einem anderen Material hergestellt ist, das entweder in einer Membran oder einem Stöpsel ausgebildet ist.

12. Ventilmechanismus nach einem der vorhergehenden Ansprüche, wobei der Filter (130) ein schalenförmiges hohles Netz umfasst, das einen ersten Abschnitt aufweist, der eine äußere zylindrische Oberfläche mit gleichmäßigem Durchmesser umfasst, die sich von ihrem ersten offenen Ende erstreckt und welche in Form einer flachen, gewölbten, konvexen oder konischen Oberfläche an einem zweiten gegenüberliegenden Ende endet.

## Revendications

1. Mécanisme de soupape comprenant
un corps de soupape (150) ayant un orifice d'entrée (152) et un orifice de sortie (154) et un passage s'étendant entre eux,
et un élément de blocage d'écoulement (110) fourni dans le passage pour bloquer l'écoulement d'une substance entre lesdits orifices d'entrée et de sortie,
et des moyens destinés à rompre ledit élément de blocage d'écoulement pour permettre ainsi à ladite substance de s'écouler dans une direction d'écoulement dudit orifice d'entrée audit orifice de sortie,
et comprenant en outre un filtre (130) fourni dans ledit passage (156) entre ledit élément de blocage d'écoulement et ledit orifice de sortie, pour filtrer ladite substance avant qu'elle ne s'écoule en dehors dudit orifice de sortie (154), ledit filtre (130) séparant ledit passage en une région filtrée et une région non filtrée,
dans lequel ledit filtre (130) a une première surface qui est en communication d'écoulement avec ladite région non filtrée, ladite première surface ayant une circonférence extérieure,
et dans lequel ledit filtre (130) est positionné à l'intérieur dudit passage de sorte qu'une première section de paroi de passage s'étend de manière circonférentielle autour de la circonférence extérieure dudit filtre, et de sorte qu'un espace (159) est fourni entre au moins une partie de ladite circonférence extérieure de la première surface et la section de paroi s'étendant de manière circonférentielle autour d'elle, ledit filtre (130) comprenant une maille en forme de cuvette, ladite première surface s'étendant d'une première extrémité ouverte (131) à une seconde extrémité opposée (135), dans une direction opposée à ladite direction d'écoulement,
et dans lequel ledit filtre (130) est positionné dans ledit passage de manière à fournir ledit espace (159) entre au moins une partie de ladite circonférence extérieure de ladite première surface, pour permettre ainsi à ladite substance de s'écouler à travers ladite première surface dudit filtre de ladite seconde extrémité à ladite première extrémité,
et dans lequel ledit passage (156) comprend en outre une cavité (157) formée dans une section de ladite région non filtrée du passage, et **caractérisé par** ledit passage (156) comportant :
une première augmentation progressive de la circonférence en amont d'une entrée de la cavité ; et une seconde augmentation brutale de la circonférence de l'entrée de la cavité.

2. Mécanisme de soupape selon une quelconque revendication 1
au moins une partie de ladite cavité (157) étant fournie dans une position à l'intérieur du passage qui se trouve en aval dudit filtre et dans lequel ledit espace est en communication d'écoulement avec ladite cavité (157), et permet ainsi à ladite substance de s'écouler à travers ladite première surface dudit filtre et plus en aval dudit filtre et dans la cavité (157).

3. Mécanisme de soupape selon la revendication 1
au moins une partie de ladite cavité (157) étant fournie dans une position qui se trouve en aval dudit filtre (130), et dans lequel ledit espace (159) est en communication d'écoulement avec ladite cavité (157), et permet ainsi à ladite substance de s'écouler à travers ladite première surface dudit filtre (130) de ladite seconde extrémité à ladite première extrémité, et au-delà de ladite première extrémité plus en aval et dans ladite cavité (157) .

4. Mécanisme de soupape selon une quelconque revendication précédente, dans lequel ledit filtre (130) est positionné à l'intérieur de ladite section de passage de sorte que ledit espace (159) forme un canal ou des canaux d'écoulement qui s'étendent à travers la première surface du filtre et entre ladite circonférence extérieure du filtre et la section de paroi s'étendant de manière circonférentielle autour d'elle.

5. Mécanisme de soupape selon la revendication 1, dans lequel
la circonférence extérieure du filtre (130) est plus petite que la circonférence intérieure de la section de paroi qui l'entoure, ledit filtre (130) étant positionné à l'intérieur de ladite section de paroi de sorte que ledit espace s'étend entre toute la circonférence extérieure du filtre et le section de paroi s'étendant de manière circonférentielle autour d'elle.

6. Mécanisme de soupape selon l'une quelconque des revendications 2 ou 3, dans lequel
ledit espace (159) s'étend dans la direction d'écoulement de ladite première section de passage à une entrée de ladite cavité (157), ladite cavité s'étendant, dans la direction d'écoulement, de ladite entrée à une première extrémité fermée de ladite cavité,
ledit mécanisme de soupape comprenant en outre une bague de retenue de filtre (180) qui s'étend loin de cette première extrémité fermée de la cavité dans la direction opposée à la direction d'écoulement,
ledit filtre (130) étant positionné sur ladite bague de retenue (180) à une position qui se trouve en amont de ladite extrémité fermée de la cavité (157).

7. Soupape selon la revendication 6, dans laquelle la bague de retenue (180) a un premier côté et un second côté opposé et une surface extérieure et une surface intérieure qui s'étendent de manière circonférentielle entre eux,
dans lequel le filtre est prévu sur le premier côté de la bague de retenue (180) et dans lequel la bague de retenue est reliée à la seconde extrémité fermée de la cavité sur son second côté.

8. Mécanisme de soupape selon la revendication 7
dans lequel ledit filtre comprend une maille creuse en forme de cuvette qui a une première extrémité ouverte (131), avec une surface extérieure s'étendant à partir de celle-ci pour former une seconde extrémité opposée (135),
et dans lequel le premier côté (182) de la bague de retenue est relié au filtre à mailles à sa première extrémité de sorte que la surface extérieure en forme de cuvette de la maille s'étend dans une direction s'éloignant de la bague (180).

9. Mécanisme de soupape selon l'une quelconque des revendications 6 à 8, dans lequel ladite cavité (157) s'étend de manière radiale vers l'extérieur depuis au moins une partie de ladite surface circonférentielle extérieure de ladite bague de retenue.

10. Mécanisme de soupape selon la revendication 9, dans lequel ladite cavité (157) s'étend de manière radiale vers l'extérieur à partir de toute ladite circonférence extérieure de ladite bague de retenue (180).

11. Mécanisme de soupape selon une quelconque revendication précédente, dans lequel l'élément de blocage d'écoulement est constitué d'acier, de céramique, de polymère vitreux ou de tout autre matériau qui peut être formé en un diaphragme ou un bouchon.

12. Mécanisme de soupape selon une quelconque revendication précédente, dans lequel le filtre (130) comprend une maille creuse en forme de cuvette qui a une première section comprenant une surface cylindrique extérieure de diamètre uniforme, s'étendant à partir de sa première extrémité ouverte, et qui se termine à une seconde extrémité opposée, sous la forme d'une surface plane, bombée, convexe ou conique.
